# EUROPEAN PATENT APPLICATION

(11) **EP 4 583 204 A1**
(43) Date of publication of application: **09.07.2025**
(21) Application number: 25150169.8
(22) Date of filing: 03.01.2025
(51) Int. Cl.: H01M 4/36, H01M 4/38, H01M 4/485, H01M 10/0525, H01M 10/0587, H01M 10/42, H01M 4/02, H01M 10/44

(54) **BATTERY PACK**

(30) Priority: 05.01.2024 US 202463618175 P
(71) Applicant: Milwaukee Electric Tool Corporation, Brookfield, WI 53005 (US)
(72) Inventor: Gavrilov, Alexei, Hockessin, DE 19707 (US); Parr, Daniel L., Greendale, WI 53129 (US)
(74) Representative: Grünecker Patent- und Rechtsanwälte PartG mbB

(57) **Abstract**

A battery pack comprising: a housing (14) including an interface couplable to an external device (20) configured to perform a group of applications, and a plurality of battery cells disposed within the housing and electrically connected to the interface, the battery cells including a cathode, an anode, and a separator; wherein the plurality of battery cells is configured to provide power to the external device for a runtime,
wherein the plurality of battery cells is configured to fully recharge within a charge time, and wherein the charge time is less than a sum of the runtime plus a rest time corresponding to the time taken to prepare a new application group.

## Description

### CROSS-REFERENCE TO RELATED APPLICATIONS

This application claims priority to U.S. Provisional Patent Application No. 63/618,175, filed on January 5, 2024, the entire content of which is hereby incorporated by reference.

### FIELD

The present disclosure relates to a battery pack and more particularly to optimizing a run time and a charge time of a battery pack.

### BACKGROUND

Cordless electrical devices (e.g., electrical devices, such as power tools, outdoors tools, other motorized devices, non-motorized devices, etc.) have a limited run-time compared to comparable corded electrical devices. Battery packs for power tools have a typical run time and charge time. The capacity of a battery pack depends on the capacity of the individual battery cells and the number and configuration of those cells. The charging time of a battery pack generally depends on the amount of current provided by the charger (and accepted by the battery pack), the capacity of the battery cells, and the overall capacity of the battery pack. Depending on the power tool, the battery pack may not be optimized for the specific application. In such a case, the operator may need to replace battery packs often during operation.

### SUMMARY

In some aspects, the techniques described herein relate to a battery pack including a housing including an interface couplable to an external device configured to perform a group of applications, and a plurality of battery cells disposed within the housing and electrically connected to the interface. The battery cells include a cathode, an anode, and a separator. The plurality of battery cells is configured to provide power to the external device for a runtime. The plurality of battery cells is also configured to fully recharge within a charge time, where the charge time is less than a sum of the runtime plus a rest time corresponding to the time taken to prepare a new application group.

In some aspects, the techniques described herein relate to a battery pack including a housing including an interface, a plurality of battery cells disposed within the housing and electrically connected to the interface, a switching control circuit electrically coupled to the plurality of battery cells, and a controller connected to the plurality of battery cells and the switching control circuit. The switching control circuit is operable to control the connection between each of the plurality of battery cells. The controller is configured to determine an operation mode of the plurality of battery cells and operate the switching control circuit between a high-power mode and a high-capacity mode.

In some aspects, the techniques described herein relate to a power tool system including a power tool configured to perform an application group over a period of time, a battery pack couplable to the power tool, and a charger couplable to the battery pack. The battery pack is configured to provide power to the power tool and additionally includes a controller. The charger is configured to provide a charging current to the battery pack. The controller is configured to receive an operating parameter of the battery pack, determine a run time of the battery pack based on an operating parameter of the battery pack, determine a charge time of the battery based on the operating parameter of the battery pack, and communicate the charge time to the user.

### BRIEF DESCRIPTION OF THE DRAWINGS

FIG. 1 illustrates a schematic of a system including of a battery pack, a power tool, and a charger, in accordance with some constructions.
FIG. 2 is an electromechanical diagram of the battery pack of FIG. 1, in accordance with some constructions.
FIG. 3 is an electromechanical diagram of the charger of FIG. 1, in accordance with some constructions.
FIG. 4 is a graph illustrating power consumed by a power tool over a duration (Ta) to complete the application separated by a rest time (Tr1), in accordance with some constructions.
FIG. 5 is a graph illustrating power consumed by a power tool over a group of applications (N) separated by a second rest time (Tr2), in accordance with some constructions.
FIG. 6 is a graph illustrating a sample mission including, in accordance with some constructions.
FIG. 7 is a graph illustrating a second sample mission including, in accordance with some constructions.

### DETAILED DESCRIPTION

Before any embodiments of the subject matter are explained in detail, it is to be understood that the subject matter is not limited in its application to the details of construction and the arrangement of components set forth in the following description or illustrated in the following drawings. The subject matter is capable of other embodiments and of being practiced or of being carried out in various ways. Also, it is to be understood that the phraseology and terminology used herein is for the purpose of description and should not be regarded as limiting.

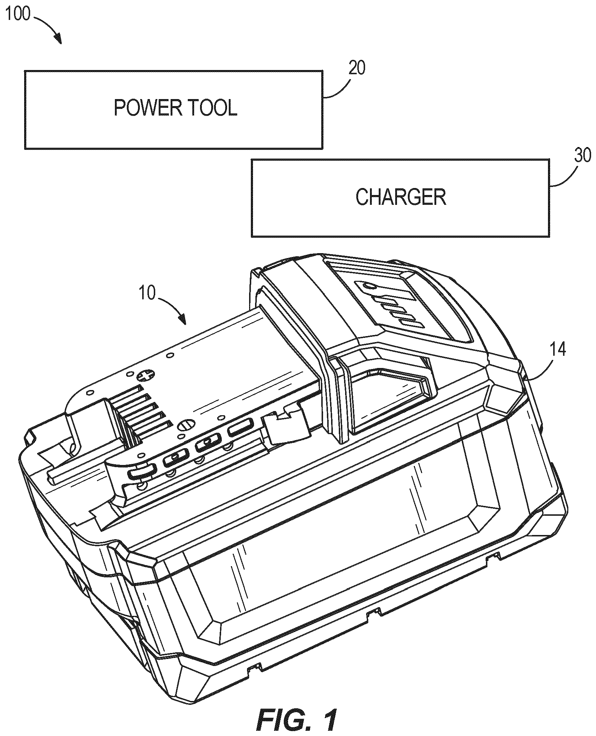

FIG. 1 illustrates a system 100 including a battery pack 10, a power tool 20, and a charger 30. The battery pack 10 may be used to power the power tool 20 (e.g., a drill, a grinder, a lawnmower, etc.). The battery pack 10 may also be usable with non-motorized devices, such as sensing devices (e.g., a visual inspection camera, an infrared sensor [such as a thermometer or thermal imaging camera], a clamp-type multimeter, a wall scanner [e.g., a "stud finder"], etc.), lighting devices (e.g., a flashlight, a floodlight, etc.), audio devices (e.g., a radio, a speaker, etc.), a temperature-controlled (e.g., heated and/or cooled) garment, etc. The battery pack 10 may include any battery pack design (e.g., smart, dumb, etc.), voltage rating (e.g., 12V, 18V, etc.), and chemistry (e.g., lithium-cobalt, lithium-manganese, lithium-iron-phosphorus, non-lithium-based battery chemistry, etc.) configured to provide power to the power tool 20. The battery pack 10 includes a housing 14 and a plurality of cells disposed within the housing 14. In constructions where the battery pack includes a plurality of lithium-ion battery cells, each cell includes an anode, a cathode, and a separator. As described in further detail below, the battery pack 10 has a runtime and a charge time that is optimized in such a way that a user mission or application can be completed with a minimal number of replacement packs. The charger 30 may provide a charging current to one or more battery packs (e.g., battery pack 10) having one or more nominal voltage values. As described in further detail below, the charger 30 may include control operations for multiple charging modes (e.g., trickle charging, fast charging, etc.) and may further include an active cooling element (e.g., a fan, a heat exchange unit, etc.). It should be appreciated that general principles outlined in this invention apply to power tools using single battery packs or multiple battery packs (e.g., dual-pack, quad-pack, etc.). In each embodiment, the battery pack(s) and/or system including the power tool, the battery pack(s), and charger is optimized to complete the mission with the minimal number of replacement packs.

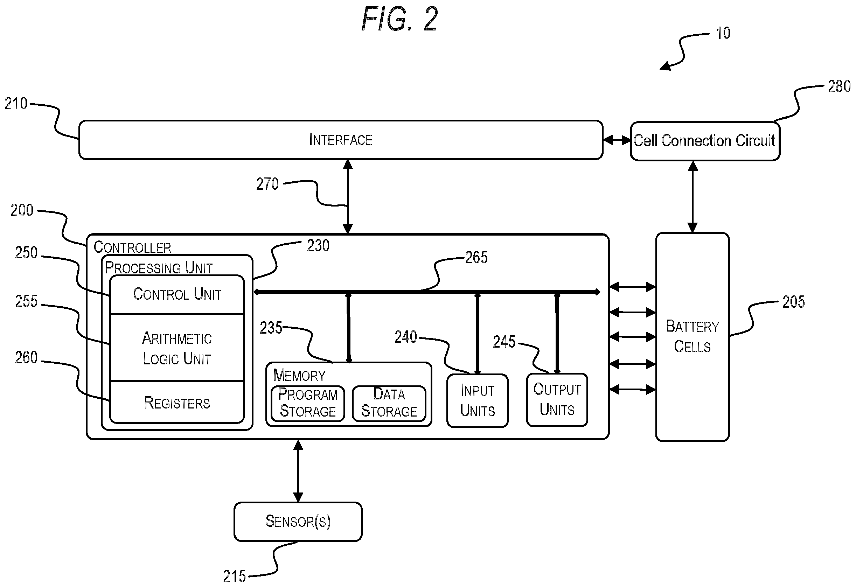

FIG. 2 illustrates a block diagram of the control system for the battery pack 10. In the illustrated construction, the control system is disposed within the battery pack 10. In other constructions, at least a portion of the control system may be disposed in the power tool 20 and/or the charger 30. The control system includes a controller 200 that is electrically and/or communicatively connected to a variety of modules or components of the battery pack 10. The controller 200 includes combinations of hardware and software that are operable to, among other things, monitor the condition of the battery pack 10, control the operation of the battery packs 10, enable or disable charging of the battery pack 10, and enable or disable discharging of the battery pack 10, etc. For example, the illustrated controller 200 is connected to one or more battery cells 205 and an interface 210. The controller 200 is also connected to one or more sensors 215 including one or more voltage sensors or voltage sensing circuits, one or more current sensors or current sensing circuits, and one or more temperature sensors or temperature sensing circuits. The controller 200 may also include hardware and software operable to communicate with external devices (e.g., the power tool 20 and the charger 30).

The controller 200 includes a plurality of electrical and electronic components that provide power, operational control, and protection to the components and modules within the controller 200 and/or the battery pack 10. For example, the controller 200 includes, among other things, a processing unit 230 (e.g., a microprocessor, a microcontroller, an electronic processor, an electronic controller, or another suitable programmable device), a memory 235, input units 240, and output units 245. The processing unit 230 includes, among other things, a control unit 250, an arithmetic logic unit ("ALU") 255, and a plurality of registers 260 (shown as a group of registers in FIG. 2) and is implemented using a known computer architecture (e.g., a modified Harvard architecture, a von Neumann architecture, etc.). The processing unit 230, the memory 235, the input units 240, and the output units 245, as well as the various modules or circuits connected to the controller 200, are connected by one or more control and/or data buses (e.g., common bus 265). The control and/or data buses are shown generally in FIG. 2 for illustrative purposes. The use of one or more control and/or data buses for the interconnection between and communication among the various modules, circuits, and components would be known to a person skilled in the art in view of the embodiments described herein.

The memory 235 is a non-transitory computer readable medium and includes, for example, a program storage area and a data storage area. The program storage area and the data storage area can include combinations of different types of memory, such as a ROM a RAM (e.g., DRAM, SDRAM, etc.), EEPROM, flash memory, a hard disk, an SD card, or other suitable magnetic, optical, physical, or electronic memory devices. The processing unit 230 is connected to the memory 235 and executes software instructions that are capable of being stored in a RAM of the memory 235 (e.g., during execution), a ROM of the memory 235 (e.g., on a generally permanent basis), or another non-transitory computer readable medium such as another memory or a disc. The software includes, for example, firmware, one or more applications, program data, filters, rules, one or more program modules, and other executable instructions. The controller 200 is configured to retrieve from the memory 235 and execute, among other things, instructions related to the control processes and methods described herein. In other constructions, the controller 200 includes additional, fewer, or different components.

The interface 210 includes a combination of mechanical components (e.g., rails, grooves, latches, etc.) and electrical components (e.g., one or more terminals) configured to and operable for interfacing (e.g., mechanically, electrically, and communicatively connecting) the cells 205 of a battery pack 10 with an external device. For example, the interface 210 is configured to receive power through a charging circuit via a power input circuit. The interface 210 is also configured to communicatively connect to the controller 200 via a communications line 270. Accordingly, the controller 200 may control the charging of the battery pack 10 through the interface 210. Additionally, the interface 210 is also configured to output power through a discharge circuit. As such, the controller 200 may also control the output of the battery pack 10 through the interface 210. The battery pack 10 may further include a cell connection circuit 280 configured to connect the plurality of battery cells in different operating modes (e.g., a high-power mode, a high-capacity mode) by controlling the connections between the plurality of battery cells 205. The cell connection circuit 280 may be operable to connect a portion of the plurality of the battery cells 205 in series to produce a larger voltage output at the interface 210. The cell connection circuit 280 may additionally or alternatively connect a portion of the plurality of battery cells 205 in parallel to produce a larger capacity output at the interface.

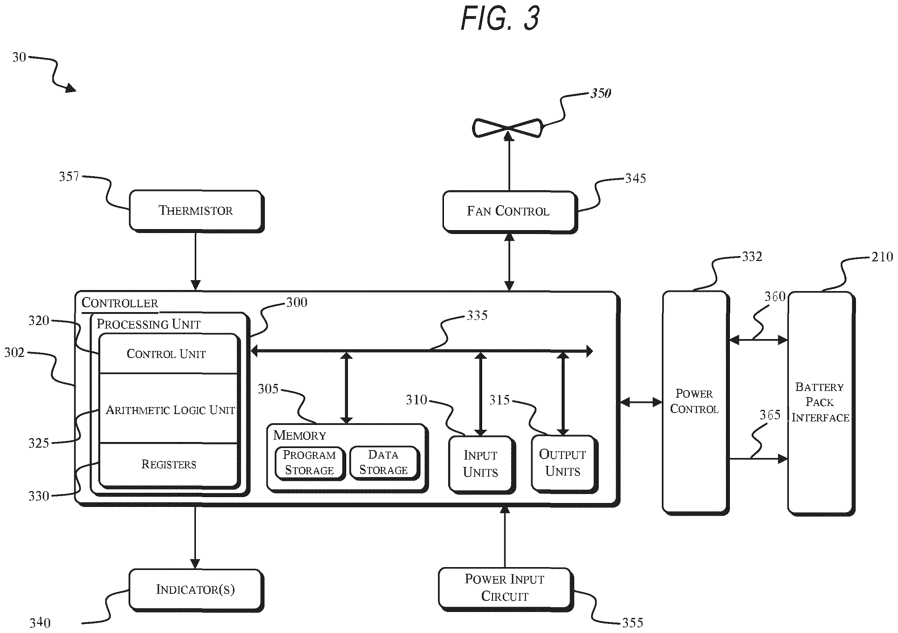

A controller 300 for the charger 30 is illustrated in FIG. 3. The controller 300 includes a plurality of electrical and electronic components that provide power, operational control, and protection to the components and modules within the controller 300 and/or battery pack charger 30. For example, the controller 300 includes, among other things, a processing unit 302 (e.g., an electronic processor, a microprocessor, a microcontroller, or another suitable programmable device), a memory 305, input units 310, and output units 315. The processing unit 302 also includes, among other things, a control unit 320, an ALU 325, and a plurality of registers 330 (shown as a group of registers in FIG. 3) and is implemented using a known computer architecture (e.g., a modified Harvard architecture, a von Neumann architecture, etc.). The processing unit 302, the memory 305, the input units 310, and the output units 315, as well as the various modules connected to the controller 300 are connected by one or more control and/or data buses (e.g., common bus 335). The control and/or data buses are shown generally in FIG. 3 for illustrative purposes. The use of one or more control and/or data buses for the interconnection between and communication among the various modules and components would be known to a person skilled in the art in view of the invention described herein.

The memory 305 is a non-transitory computer readable medium and includes, for example, a program storage area and a data storage area. The program storage area and the data storage area can include combinations of different types of memory, such as a ROM a RAM (e.g., DRAM, SDRAM, etc.), EEPROM, flash memory, a hard disk, an SD card, or other suitable magnetic, optical, physical, or electronic memory devices. The processing unit 302 is connected to the memory 305 and executes software instructions that are capable of being stored in a RAM of the memory 305 (e.g., during execution), a ROM of the memory 305 (e.g., on a generally permanent basis), or another non-transitory computer readable medium such as another memory or a disc. Software included in the implementation of the charger 30 can be stored in the memory 305 of the controller 300. The software includes, for example, firmware, one or more applications, program data, filters, rules, one or more program modules, and other executable instructions. The controller 200 is configured to retrieve from the memory 305 and execute, among other things, instructions related to the control processes and methods described herein. In other constructions, the controller 200 includes additional, fewer, or different components.

The controller 300 is electrically and/or communicatively connected to a variety of modules or components of the charger 30. For example, the illustrated controller 300 is connected to the battery pack interface 210 through a power control module 332. The power control module 332 may control the power output by the charger 30 along a power line 365. The controller 300 can include or otherwise be in communication with a plurality of indicators 340 (e.g., one or more LEDs), a fan control module 345 operable to control a fan 350, a power input circuit 355, and a thermistor 357. The power input circuit 355 may include an AC/DC converter and a buck/boost converter to convert power input through an AC source to a DC charging current. The controller 300 includes combinations of hardware and software that are operable to, among other things, control the operation of the charger 30, activate the indicators 340, estimate the temperature of a first heatsink, measure the temperature of a second heatsink, etc. As discussed in further detail below, the charger 30 may include additional temperature control components operable to forcefully cool a coupled battery pack.

In some embodiments, the charger 30 can communicate with the at least one battery pack (e.g., via communications line 360) to control a rate at which the at least one battery pack receives the power based on a combination of a charging profile and other parameters (e.g., SOC, temperature, cell age, cell health, and charge acceptance based differential voltage). The charging profiles and other paraments can both be monitored data with the battery pack and/or data stored in the memory 305 of the charger 30.

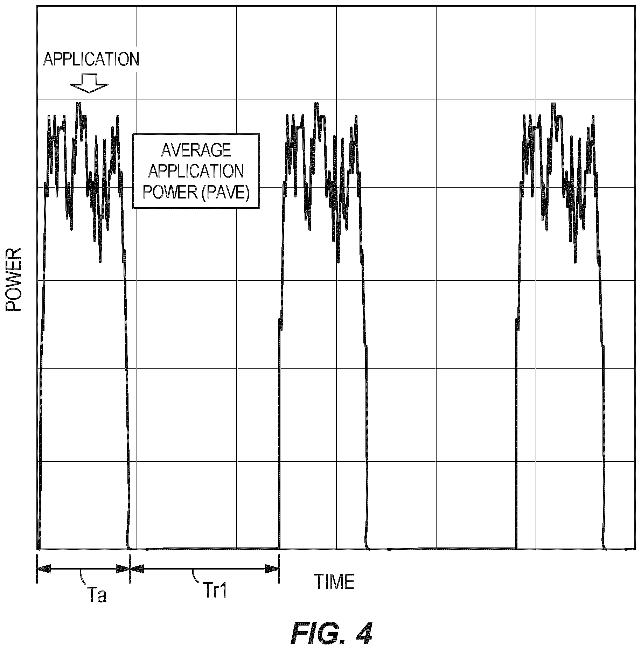

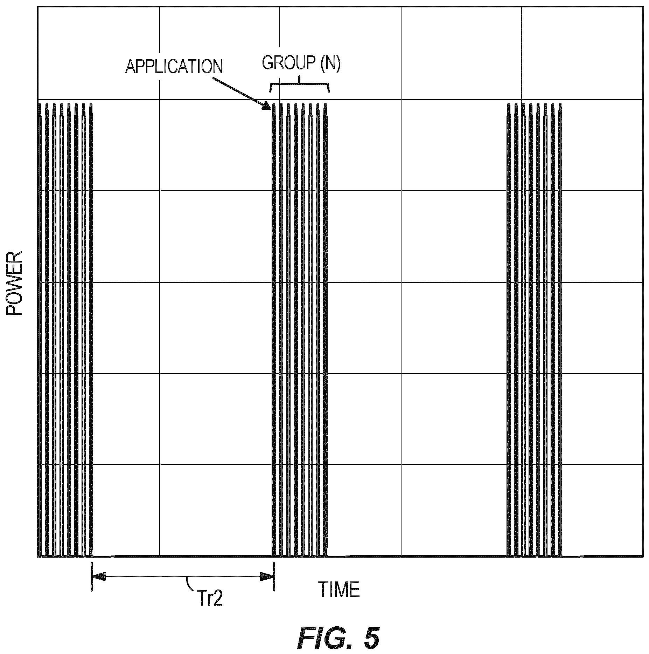

As illustrated in FIGS. 4-6, power tools usually require high power bursts with a duration Ta to complete an application (cut, grind, drilling, etc.), separated by a rest time Tr1 to allow the operator to prepare for a new application. For example, for an operation using a saw to cut portions from a stock plank, a user may power the saw for the duration Ta of the cut and then allow the saw to idle for a period (rest time Tr1) while repositioning and/or measuring before beginning another cut. As shown in FIG. 5, groups of applications having N number of applications per group are further separated by a second rest time Tr2. In the second rest time Tr2, a user allows the power tool 20 to idle for another, often longer, time period to prepare (changing job position, preparing the site, etc.) for the next application group. Continuing the above example, a user may transport the cut portions of the plank and prepare a new plank to be cut.

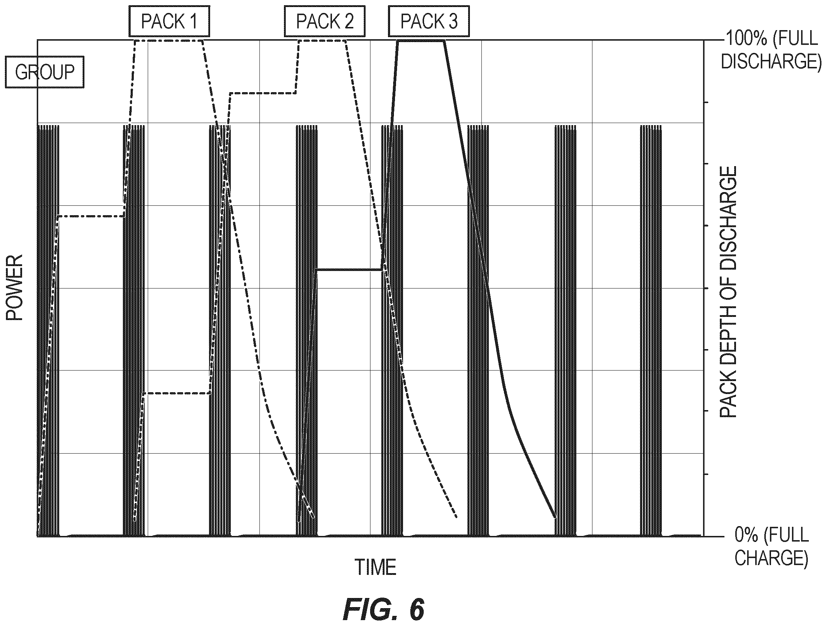

FIG. 6 illustrates a sample mission simulating the power usage of a plurality of applications over the course of a job. The graph includes an application power axis (e.g., left y axis), and a battery pack state of discharge (e.g., right y axis) as function of time (e.g., x axis). In this example, one battery pack can complete one group of applications and ~33% of the second group of applications. At this point, the first battery pack is replaced with a second battery pack while the first battery pack is placed on the charger. The second battery pack can complete the remainder of the second group of applications and a third group of applications but quickly (e.g., ~10% of the group) becomes fully discharged into a fourth group of applications. It will be appreciated that in the illustrated example, the first battery pack did not fully charge in the time the second battery was discharged, and a third battery pack is needed to prevent a delay in the mission. With the addition of a third battery pack, an operator may be further required to manage the charge times of both the first (still charging) and the second (fully depleted) battery packs. Over the course of the mission, as the charge time continues to lag behind the power discharged during operation, additional (e.g., a fourth, a fifth, etc.) battery packs may be introduced. Accordingly, while current battery packs are designed to maximize power (e.g., current load) and maximize energy (e.g., current capacity), these battery packs may ignore practical mission constraints. As shown in FIG. 4, these designs cause battery packs to take longer to charge than the time taken to fully drain a replacement battery pack.

In a second construction, battery packs and the associated charging systems may be adjusted such that one or fewer spare battery packs are needed to complete a mission. Specifically, each battery pack may be designed for an operator to continuously alternate between a first battery pack and a second battery pack between application groups. It will be appreciated that the energy capacity of the battery packs according to the second construction is lowered compared to the conventional construction. The minimum runtime of a battery pack is the time required to operate the tool for one group of applications. Said another way the run time (RT) of the battery pack according to the second construction is designed to be greater than the number of applications per group (N) times the duration of each application (Ta). In equation form, the runtime specification of the battery pack may be represented as RT > N*Ta. Similarly, the maximum charge time of the battery pack is the total rest time before a new application group is begun. Said another way, the charge time (CT) of the second battery pack may be reduced to such that the charge time is less than the number of applications (N) minus 1 times the first rest time (Tr1) to position for the new application plus the second rest period (Tr2). In equation form, the charge time of the battery pack may be represented as CT < (N-1)*Tr1+ Tr2. In other constructions, the charge time of the battery pack may additionally or alternatively be represented as CT < (N-1)*Tr1+ Tr2 + RT. In some constructions, a voltage (V) and a cathode capacity (Qc) of the cells of the battery pack may be represented as Qc*V >= N*Ta*Pave (Average application power). In some constructions an anode capacity (Qa) may be represented as Qa/Ic < (N-1)*Tr1+ Tr2 (Ic = charge current). In other constructions, the anode capacity (Qa) may additionally or alternatively be represented as Qa/Ic < (N-1)*Tr1+ Tr2 + RT (Ic = charge current).

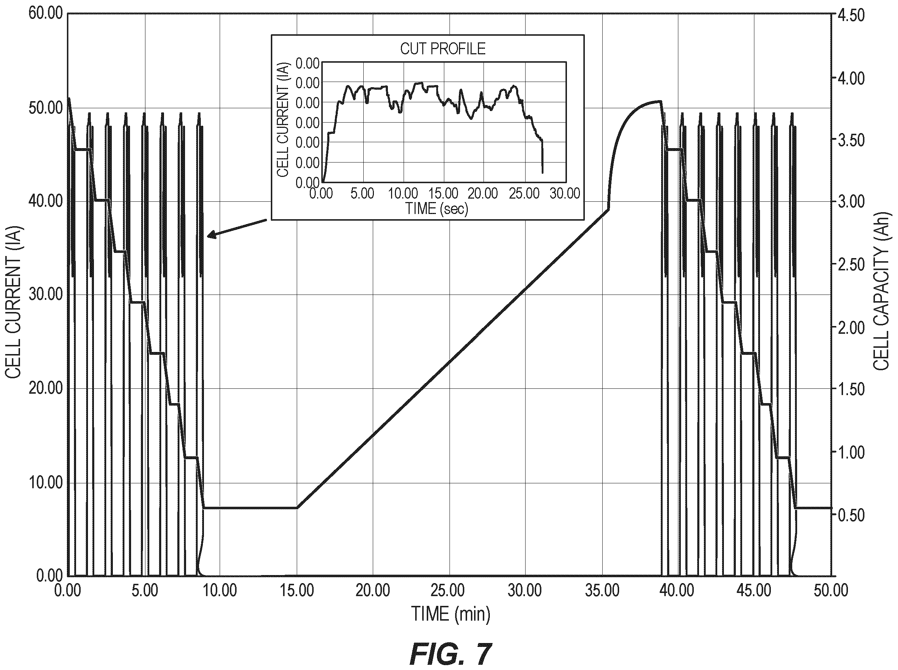

FIG. 7 illustrates an exemplary battery pack according to a second construction on a sample mission. The graph includes a cell current axis (e.g., left y axis in IA) and a cell capacity axis (e.g., right y axis in Ah) as function of time (e.g., x axis). In the illustrated example, the cell capacity is more than sufficient to provide power to the power tool 20. Accordingly, the runtime (RT) of the battery pack 10 is greater than the total time of each application (Ta) in the first group of applications (N). Additionally, the charge time (CT) of the battery pack is lower than the second rest period (Tr2) such that a battery pack may fully charge between application groups. In the illustrated example, only one battery pack 10 is required. However, in other instances a larger tool operation time (Ta) or more applications per group (N) may cause the battery pack to fully discharge by the time an application group is complete. Similarly, a smaller second rest period (Tr2) may not provide enough time for a single battery to fully recharge. For example, in another mission (not shown), a first battery pack is fully discharged by the power tool 20 after completing a first group of applications. The first battery pack is then replaced by a second battery pack and placed in a charger. The first battery pack is charged to full over the course of the second rest period Tr2 and the second group of applications; including the runtime RT and sum of all the first rest times ([N-1]*Tr1). In other words, the charge time CT, in this example, is equal the sum of the runtime RT, the sum of all the first rest times ([N-1]*Tr1), and the second rest time Tr2. Accordingly, before the third group of applications is prepared, the first battery pack is fully charged and available to replace the second battery pack. The second battery pack may charge within the same time as the first battery pack, allowing the user to swap between the first battery pack and the second battery pack indefinitely.

The optimization of the battery pack run time and charge time can be achieved by any combination of adjustments or changes at a cell level, a battery pack level, and/or a system level. For example, at the cell level the battery pack may be tuned such that the battery cells are design for higher power and lower energy. For example, the cells may be reconfigured to allow a lower loading but produce more power. The cells may utilize materials or structures with high charge capability to redesign a cell to favor low impedance and fast charging. Such materials and structures may also maintain or improve the energy capacity of the battery pack. Examples of materials with a higher charge capability include may include zero-strain structures (e.g. LTO, NWO, NTO, XNO), anodes including high capacity materials (Si, nanoparticle materials, S-/C), and cathodes including high-voltage materials (e.g., LiCoO₂, LNMO, LMP, LFP, NCM, high Ni, etc.). Examples of structures that aid in reducing the impedance and thereby increase the charging speed include thinner coatings, low-impedance tab designs, and 3D electrode structures. In some constructions, the cells have a tabless design, where the electrodes are directly connected to battery terminals. In some constructions, the battery cell is spirallywound. Spirally winding a battery cell provides a larger surface material for the anode and electrode to contact the electrolyte, creating a larger power density in the battery cell. It will be appreciated that a larger power density may allow for an increased charge and discharge rate of the battery cell.

In some constructions, a cathode areal capacity is less than a predetermined cathode areal capacity value (e.g., measured in mAh/cm2) and an area of the cathode is greater than a predetermined area (e.g., measured in cm2). In some constructions, a cell impedance is less than a predetermined cell impedance (e.g., measured in mOhm). In some constructions, an anode resistivity is less a predetermined anode resistivity (e.g., measured in Ohm*cm2).

In some constructions, the anode material is a material with zero-strain structure. Zero-strain materials provide a high battery operating voltage and capacity. An anode material with a zero-strain structure may also be more stable than a traditional battery over the cycle life of the battery. In some constructions, the anode material is selected from the group LTO (Li₄Ti₅O₁₂), NTO, NWO, XNO. In some constructions, the anode material specific capacity is greater than a first predetermined anode material specific capacity (e.g., measured in mAh/g). In some constructions, the anode material specific capacity is greater than a second predetermined anode material specific capacity (e.g., measured in mAh/g). In some constructions, the anode material particle size is less than 10 microns. In some constructions, the anode material particle size is less than 1 micron. In some constructions, the anode material particle size is less than 0.1 microns. In some constructions, the anode active material is Si (Silicon)/graphite mixture, Si/carbon composite, Si-dominant anode, or Si nanowire material. In some constructions, the anode material specific capacity is greater than a first predetermined anode material specific capacity (e.g., measured in mAh/g). In some constructions, the anode material specific capacity is greater than a second predetermined anode material specific capacity (e.g., measured in mAh/g). In some constructions, the anode material specific capacity is greater than a third predetermined anode material specific capacity (e.g., measured in mAh/g).

In some constructions, the anode or the cathode is an electrode with a 3D structure configured to provide an increased surface area for the electrode to react with the electrolyte. In some constructions, the anode and/or the cathode current collector is a material with a 3D structure. In some constructions, the cathode active material is high-Ni material with the general formula LiNixM(1-x)O2 (where M is at least one metal element and 0.83,x,0.99). In some constructions, the cathode has specific capacity greater than a predetermined cathode specific capacity (e.g., measured in mA/g). In some constructions, the cathode active material is a high-voltage material selected from the group of predetermined materials. In some constructions, the cathode material has a predetermined voltage (e.g., measured in V). In some constructions, the cathode specific capacity has a predetermined cathode specific capacity (e.g., measured in mAh/g,yy).

In other constructions, the traditional battery cells may be at least partially replaced with alternative electrical components including supercapacitors and fuel cells. Compared to traditional electrochemical battery cells, supercapacitors have a lower total capacity but a much larger charge and discharge rate. Supercapacitors can withstand significantly more (e.g., up to one million) cycles and can operate at higher temperatures than traditional batteries and accordingly are less prone to wear due to constant charging and discharging.

At the battery pack level, the battery packs may utilize cells with different power/energy profiles connected in parallel in the same pack (cell-cell hybrid). For example, at least a portion of the cells within the battery pack may be designed with a higher voltage and lower current capacity. In some constructions, the battery pack may include higher power cells having a capacity greater than Ta*Iave (Iave = average current) and include higher capacity cells having a capacity greater than Ta*N*Iave. In another example, the battery pack may be designed to operate at a higher voltage, allowing the battery pack to charge and discharge the same amount of power using less current. In yet another example, the electrical components of the battery may be designed with a lower impedance. In yet another example, the electrical components of the battery may be forcefully cooled, thereby reducing the increase in resistance due to Joule heating.

In another construction, the battery pack 10 may be designed to minimize impedance with a modified contact design. The battery pack may include a cell interconnection (e.g., a power bus) with a lowered resistance. For example, the resistivity of the cell interconnections within the battery pack may be less than 2*10⁻⁶ ohm-centimeters. The battery pack 10 may include terminals with a lowered resistance. For example, the resistivity of the battery pack terminals may be less than 2*10⁻⁶ ohm-centimeters.

In another construction, the plurality of cells of the battery pack 10. For example, the controller 200 may configure, using the cell connection circuit 280, a portion of the plurality of battery cells into a series configuration to achieve a desired voltage and in parallel to achieve a desired capacity. In another example, during operation of the power tool 20, a battery pack 10 may operate in a high-capacity mode and configure at least a portion of the plurality of battery cells in parallel. During charging, the battery pack 10 may switch operation from a high-capacity mode to a high-voltage. In the high-voltage mode, at least a portion of the plurality of battery cells may be connected in series, allowing the battery pack 10 to charge using less current at a higher voltage. The battery pack may be configured to operate for according to runtime (RT) and charge time (CT) based on the following criteria: RT > N*Ta, and CT < (N-1)*Tr1+ Tr2. In other constructions, the battery pack 10 may be configurable to connect the plurality of cells in series and parallel based on the criterion: RT > N*Ta and CT < (N-1)*Tr1+ Tr2. As discussed in further detail below, the controller 200 of the battery pack 10 may be configured to calculate an expected charge time and runtime and reconfigure the battery pack 10 to meet the needs of the application.

In another construction, the battery pack 10 may be forcefully cooled using an active cooling method (e.g., a fan, a heat exchanger, liquid cooling, etc.). In some constructions, the battery pack may include a fan configured to cool portions such as the power bus and switches of a battery pack using convection. In some constructions, the battery pack 10 may additionally include a heat sink to absorb a portion of the heat produced from the electrical components of the battery pack 10. The battery pack 10 may be configured to forcefully cool the heat sink instead of directly cooling a heat producing electrical component.

At the system level, the system 100 may employ advanced charging protocols and leverage chargers with active cooling. More specifically, the charger 30 may charge the battery pack 10 using a fast-charging protocol (e.g., over-voltage charging, stepped fast charging, constant-current charging, constant voltage charging, etc.). Additionally or alternatively, the system 100 include forced cooling means (e.g., active cooling, phase transition cooling, etc.) at least one of the battery pack 10 and the charger 30. In another example, the system 100 may include communication between the battery pack 10 and the power tool 20 to allow for reconfiguration and optimization of the battery pack 10 based on the operation of the power tool 20. In another example, the system 100 may further include communication between the battery pack 10 and the charger 30 based on the state of charge and components of the battery pack 10.

In some constructions, the system 100 may include a smart battery pack configured to recognize the specific tool it is powering and calculating the optimal battery parameter. For example, based on the connected tool, the controller 200 of the battery pack 10 may calculate an approximate battery pack runtime (RT) of the connected power tool 20. The controller 200 may additionally calculate whether the battery pack runtime (RT) is sufficient to complete a group of applications. To determine whether a battery pack runtime (RT) is sufficient to complete a group of applications, the controller 200 may calculate an approximate runtime using a lookup table or based on historical data of the connected power tool 20. Upon determining that the approximate runtime is greater than the battery pack runtime (RT), the electronic controller may alert the user.

In some constructions, one or more controllers 200, 300 of the system 100 may track user behavior and create a use profile. Based on the use profile, the system 100 may control the battery pack 10 and power tool 20 to adjust power output to complete a group of applications. Additionally, the system 100 may control the one or more controllers 200, 300 to guide a user to start charging. For example, controllers 200, 300 may additionally or alternatively provide calculated runtimes (RT) and charge times (CT) of the connected battery pack to the user, allowing the user to keep track of the charge requirements of the battery pack. In another example, when the system may use the user behavior to use a low charge rate (e.g., trickle charging) during inactivity periods to maximize battery life and apply fast charging to charge as quick as possible in anticipation of upcoming user activity.

In some constructions, the system includes a smart battery pack capable to recognize what specific tool it is powering and communicating optimal for the mission charge protocol to the charger. In some constructions, the system includes a smart battery pack configured to track user behavior and adjust use profile accordingly. In some constructions, the system adjusts a power load to complete the group of applications and guides the user to start charging. In some constructions, the system is configured to coach the user how to complete the job with the lowest number of replacement packs.

While the disclosure has been presented with respect to a limited number of examples, those skilled in the art, having benefit of this disclosure, will appreciate other examples may be devised which do not depart from the scope of the present disclosure.

Other aspects of the invention are described below.

In a first aspect of the invention, a battery pack, comprising a housing including an interface; a plurality of battery cells disposed within the housing and electrically connected to the interface; a switching control circuit electrically coupled to the plurality of battery cells, the switching control circuit operable to control the connection between each of the plurality of battery cells; and a controller connected to the plurality of battery cells and the switching control circuit, the controller configured to determine an operation mode of the plurality of battery cells and operate the switching control circuit between a high-power mode and a high-capacity mode, is described.

In a second aspect, the battery pack according to the first aspect, wherein the high-power mode includes controlling the switch control circuit to connect at least a portion of the plurality of battery cells in a series configuration.

In a third aspect, the battery pack according to the first or second aspect, wherein the high-capacity mode includes controlling the switch control circuit to connect at least a portion of the plurality of battery cells in a parallel configuration.

In a fourth aspect, the battery pack according to any of the first, second or third aspects, wherein the controller determines an operation mode of the plurality of battery cells based on a device coupled to the interface.

In a fifth aspect, the battery pack according to any of the first, second, third or fourth aspects, further comprises a supercapacitor disposed within the housing, wherein the supercapacitor is electrically connected to the interface and the plurality of battery cells.

In a sixth aspect, the battery pack according to any of the first, second, third, fourth, or fifth aspects, wherein the plurality of battery cells defines a first portion having a first current capacity and a second portion having a second current capacity different than the first current capacity.

## Claims

1. A battery pack comprising:
a housing including an interface couplable to an external device configured to perform a group of applications, and
a plurality of battery cells disposed within the housing and electrically connected to the interface, the battery cells including a cathode, an anode, and a separator;
wherein the plurality of battery cells is configured to provide power to the external device for a runtime,
wherein the plurality of battery cells is configured to fully recharge within a charge time, and
wherein the charge time is less than a sum of the runtime plus a rest time corresponding to the time taken to prepare a new application group.

2. The battery pack of claim 1, wherein the runtime is greater than a multiple of a number of applications in a group of applications performed by the external device multiplied by the time taken to perform each application in the group of applications.

3. The battery pack according to claim 1 or 2, wherein the charge time is less than a number of applications minus one multiplied by a first rest time corresponding to the time to position a new application plus a second rest period corresponding to the time taken to prepare a new application group.

4. The battery pack accoding to any of claims 1 to 3, wherein each of the plurality of battery cells is spirally wound.

5. The battery pack according to any of claims 1 to 4, wherein an active material in the anode of each of the plurality of battery cells is one of: a silicon graphite mixture, a silicon carbon composite, a silicon-dominant anode, or a silicon nanowire material.

6. The battery pack according to any of claims 1 to 5, wherein an anode material is a material with a zero-strain structure.

7. The battery pack of claim 6, wherein the anode material is selected from one of LTO, NTO, NWO, XNO.

8. The battery pack of claim 6, wherein a particle size of the anode material is less than 10 microns.

9. The battery pack according to any of claims 1 to 8, wherein the cathode is an electrode with a 3D structure.

10. A power tool system comprising:
a power tool configured to perform an application group over a period of time;
a battery pack couplable to the power tool, the battery configured to provide power to the power tool, the battery pack including a controller; and
a charger couplable to the battery pack, the charger configured to provide a charging current to the battery pack;
wherein the controller is configured to
receive an operating parameter of the battery pack,
determine a runtime of the battery pack based on an operating parameter of the battery pack,
determine a charge time of the battery based on the operating parameter of the battery pack, and
communicate the charge time to a user.

11. The power tool system of claim 10, wherein the operating parameter of the battery pack includes a state of charge of the battery pack over the period of time of the application group.

12. The power tool system according to claim 10 or 11, wherein the charge time is less than a number of applications minus one multiplied by a first rest time corresponding to the time to position a new application plus a second rest period corresponding to the time taken to prepare a new application group.

13. The power tool system of claim 12, wherein the charger further includes a charge controller in communication with the controller of the battery pack, the charge controller configured to charge the battery pack according to the charge time calculated by the controller of the battery pack.

14. The power tool system according to any of claims 11 to 13, wherein the runtime is greater than a multiple of a number of applications in a group of applications performed by an external device multiplied by the time taken to perform each application in the group of applications.
